# EUROPEAN PATENT SPECIFICATION

(11) **EP 0 439 352 B1**
(45) Date of publication and mention of the grant of the patent: **06.09.1995**
(21) Application number: 91300536.9
(22) Date of filing: 24.01.1991
(51) Int. Cl.: B01D 29/52, B01D 29/11

(54) **Method for producing a filter element**
Verfahren zur Herstellung eines Filterelements
Méthode de fabrication d'un élément de filtre

(30) Priority: 25.01.1990 JP 15866/90
(43) Date of publication of application: 31.07.1991
(73) Proprietor: NIPPONDENSO CO., LTD., Kariya-city Aichi-pref., 448 (JP)
(72) Inventor: Nonoyama, Kazumi, Aichi-gun, Aichi-ken (JP); Okumura, Takanari, Nagoya-shi (JP); Matsumoto, Noriya, Horacho, Okazaki-shi (JP); Oya, Yoshihiko, Takahama-shi (JP); Akado, Hajime, Anjo-shi (JP); Taki, Yoshihiro, Midori-ku, Nagoya-shi (JP)
(74) Representative: Price, Paul Anthony King

(56) References cited:
- EP-A- 0 350 338

## Description

The present invention relates to a method for producing a filter element suitable for a fuel filter, a lubricant filter and the like.

For improving filtering efficiency by increasing the effective filtering area in the limited volume of a filter, it is known to use a honeycomb construction of sheet-shaped filter material.

In the disclosures of Japanese Patent Examined Publication No. 61-50612 and U.S. Patent Publication No. 2599604, a flat sheet filter material and a wave-shaped sheet filter material are fixed to each other to form a combination sheet with a plurality of first small holes therebetween and the combination sheet is rolled into a cylindrical body with the first small holes and a plurality of second small holes formed between adjacent layers in the rolled combination sheet. At one end of the cylindrical body, the ends of the first small holes are filled with an adhesive so as to be hermetically sealed and the ends of the second small holes are left open. At the other end of the cylindrical body, the ends of the second small holes are filled with an adhesive so as to be hermetically sealed and the ends of the first small holes are left open, so that a liquid can flow through filtering areas formed between the second small holes and the first small holes. The combination sheet may consist of a pair of wave-shaped sheet filter materials fixedly connected to each other through adhered flat portions between semi-circular portions, as shown in Fig. 13 and as disclosed in EP-A-0,350,338.

According to the present invention, there is provided a method for producing a filter element, comprising the step of: forming a filter body having a first hole and a second hole which extends adjacent and substantially parallel to the first hole and communicates with the first hole through filter material, wherein, at one end of the filter body, the first hole is closed and the second hole is open; characterized in that the method further comprises the steps of: covering the first and second holes at the other end of the filter body with sheet-like thermoplastic adhesive; and melting the thermoplastic adhesive so as to close and seal the adjacent end of the second hole and to open the adjacent end of the first hole.

With the method of the present invention, the end of the second hole is sealed closed by melting the thermoplastic adhesive and the melting action does not generate a large deforming force that could deform the second hole. Therefore, the shapes of the first and second holes remain substantially unaltered as the adhesive is melted.

The invention will now be described by way of non-limiting embodiments with reference to the accompanying drawings, in which:-
Fig. 1 is an oblique projection view showing a spirally rolled filter sheet including a plurality of holes and suitable for use in the method of the present invention;
Fig. 2 is a front plan view showing a wave-shaped filter member of the filter sheet of Fig. 1;
Fig. 3 is an oblique projection view showing a wave-shaped filter member of the filter sheet of Fig. 1;
Fig. 4 is an oblique projection view showing the pair of filter members of Figs. 2 and 3 before being assembled together;
Fig. 5A is a side plan view showing the pair of filter members of Fig. 4 before being assembled;
Fig. 5B is a side plan view showing the pair of filter members of Fig. 4 after being assembled;
Fig. 6 is an oblique projection view showing a hot-melt adhesive sheet arranged in accordance with the present invention on one end of a filter body including the filter sheet of Fig. 1;
Fig. 7 is a front plan view showing the arrangement of first holes and second holes at the end of the filter body of Fig. 6 on which the adhesive is arranged, according to the present invention;
Fig. 8 is a side cross-sectional view showing the arrangement in the filter body contained by the container and including the first holes and the second holes;
Fig. 9 is a side cross-sectional view showing the flow of liquid through the filter body;
Fig. 10 is a partially cross-sectional side view showing a fuel filter including the filter body;
Fig. 11 is a side plan view showing a pair of members constituting the filter body, before assembly;
Fig. 12 is a side plan view showing the pair of members of Fig. 11, after assembly;

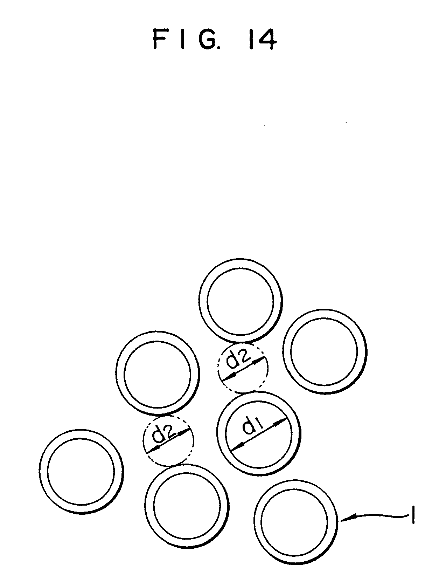

Fig. 13 is an oblique projection view showing a prior art method for producing a filter body;
Fig. 14 is a plan view showing the arrangement of the first holes and the second holes at the end of the filter body on which a sheet-shaped adhesive is arranged, according to the present invention; and
Fig. 15 is a front plan view showing a structure of the filter body used in an embodiment of the present invention.

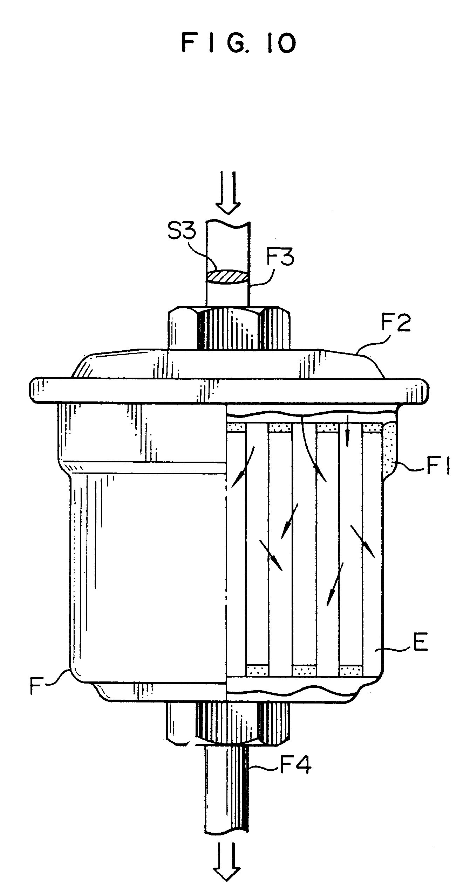

Fig. 10 shows a fuel filter which is arranged on a fuel line for supplying fuel to an engine and which includes a filter case F made of iron or plastic resins and a filter element E received by the filter case F. An upper and outer periphery of the filter element E is fixed to an inner wall of the filter case F by an adhesive F1. An upper opening part of the filter case F is covered by a cover F2, and an outer periphery of the cover F2 is fixed to the upper opening part of the filter case F by a caulking portion. Fuel is introduced into the fuel filter through an inlet F3 arranged at a center of the cover F2, passes through the filter element E, and is supplied to the engine (not shown) through an outlet F4 arranged at a bottom surface of the filter case F.

When producing the filter element E by using the present invention, the filter material of filter members 1, 2 is filter paper, nonwoven fabric, wire net, synthetic textile or any suitable material. When the filter element is to be used in a fuel filter, the thickness of the filter members 1, 2 may be about 0.14 mm, because the flow speed of liquid in the fuel filter is smaller than in oil filters.

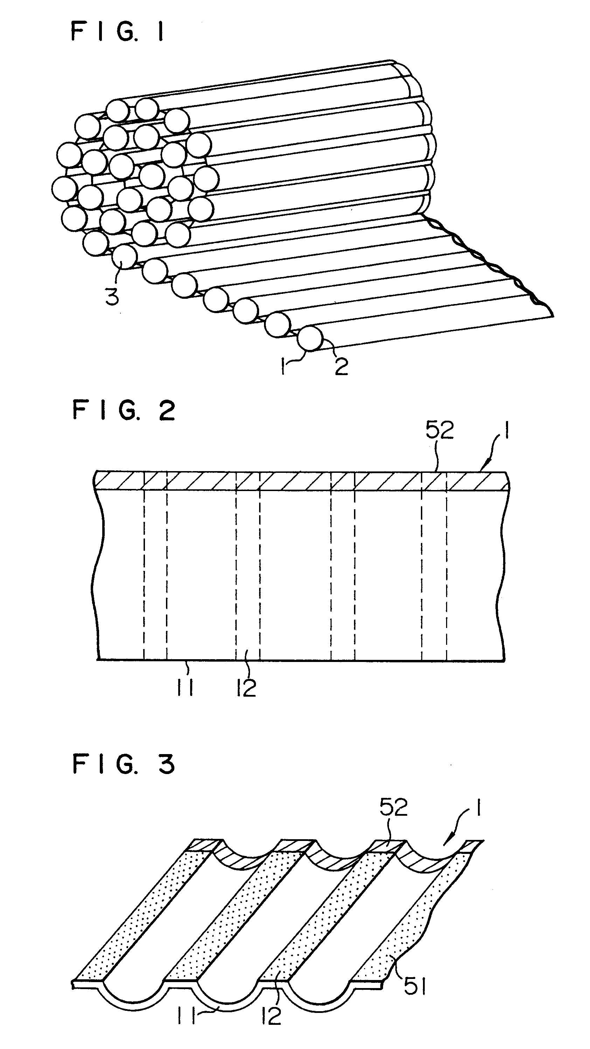

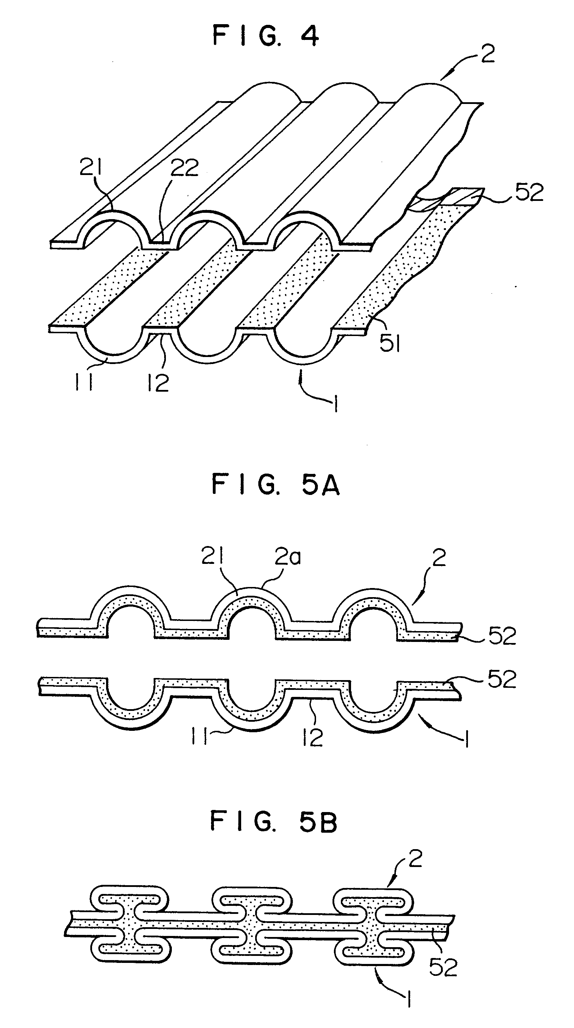

An adhesive sheet 52 made of a polyamide-type hot melt adhesive is fixed to an end of each of the band-shaped filter members 1, 2 by, for example, a heat-and-press process. The thickness of the adhesive sheet 52 is 100 µm. Subsequently, semi-circular portions 11, 21 and flat portions 12, 22 therebetween are formed on the band-shaped filter members 1, 2 by, for example, a wave-shaped roller, as shown in Figs. 3 and 4. The flat portions 12 on the band-shaped filter member 1 are fixed to the flat portions 22 on the band-shaped filter member 2 by an adhesive 51 so that holes 3 are formed between the semi-circular portions 11, 21. Thereafter, the ends of the band-shaped filter members 1, 2 with the adhesive sheet 52 are pressed against each other with heating so that they are sealed together and an end of each of the holes 3 between the semi-circular portions 11, 21 is closed, as shown in Figs. 5A and 5B.

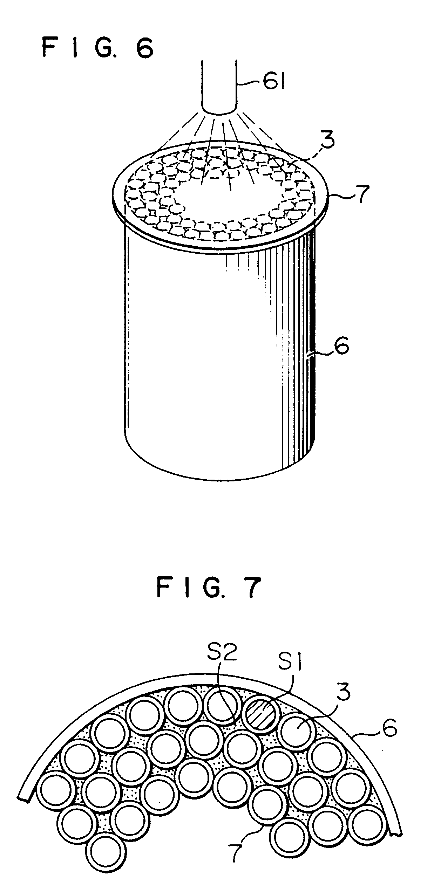

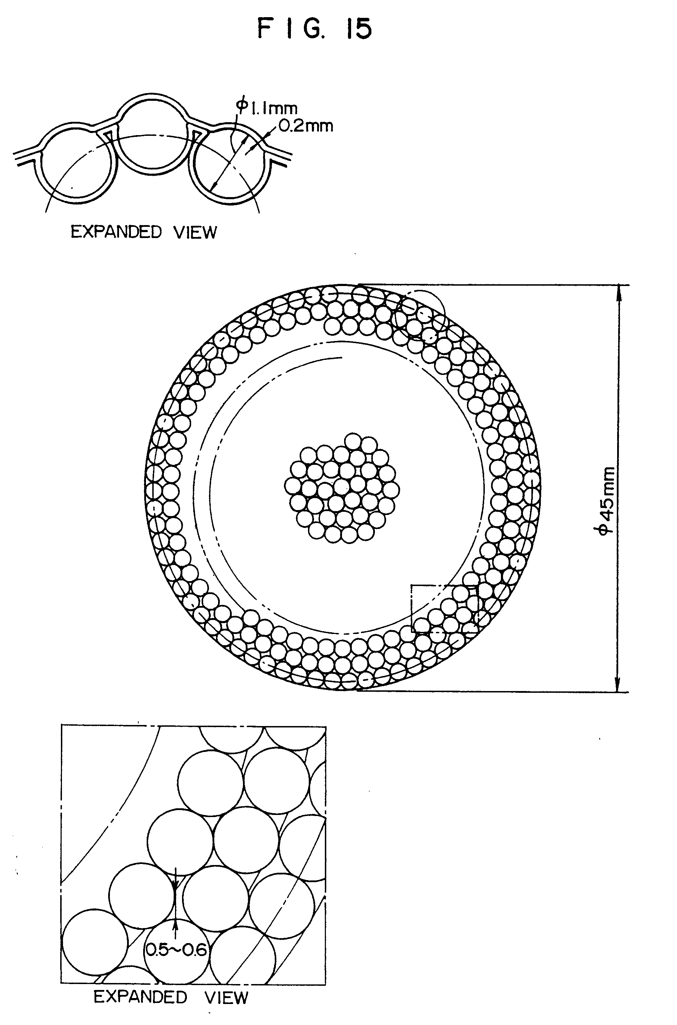

A combination of the band-shaped filter members 1, 2 is spirally rolled into a cylindrical filter body, as shown in Fig. 1. The cylindrical filter body is inserted into a container 6 with, for example, 45 mm outer diameter as shown in Fig. 15. As shown in Fig. 6, a hot-melt or thermoplastic sheet-shaped adhesive 7 (thickness 200-300 µm) of, for example, polyamide-type is arranged on an end of the cylindrical filter body of the band-shaped filter members 1, 2, which end is the opposite end from the sealed ends of the band-shaped filter members 1, 2. Subsequently, the hot-melt sheet-shaped adhesive 7 is melted by heating it to more than the melting temperature thereof between 200 degrees C and 300 degrees C for 10 to 30 seconds. It is then cooled to less than the melting temperature so that holes or clearances 31 other than the holes 3 in the filter body are filled and sealed with the hot-melt adhesive 7. In the heating of the hot-melt sheet-shaped adhesive 7, it is preferable to heat only the hot-melt sheet-shaped adhesive 7, without heating the filter body, by blowing hot air onto the hot-melt sheet-shaped adhesive 7 or by directing infrared radiation onto the adhesive 7. Both the thermoplastic sheet-shaped adhesive 7 and the cylindrical filter body may be heated around their circumferences at 200 to 300 degrees C for 2 to 3 seconds so that the thermoplastic sheet-shaped adhesive 7 deforms to contact closely and to slightly join the filter body before the hot-melt sheet-shaped adhesive 7 is melted by heating it for 10 to 30 seconds.

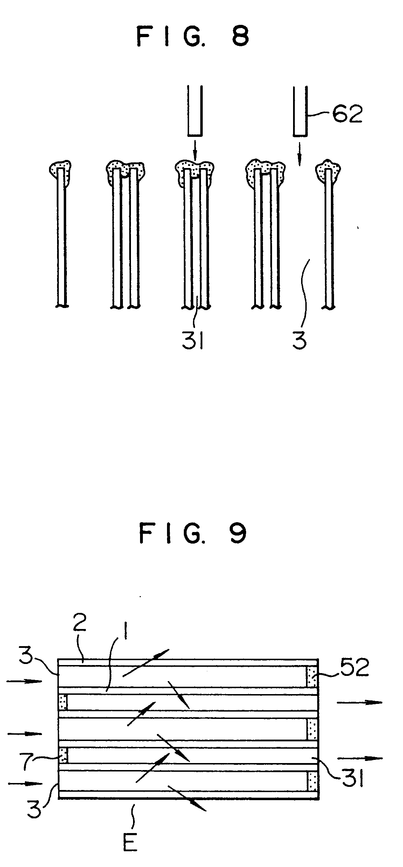

The hot-melt sheet-shaped adhesive 7 may be melted partially and selectively by a controlled heat energy of nozzle-jet hot air or focused infrared rays generated by a partial heater 62 shown in Fig. 8. Sufficient heat is applied above the holes 3 to melt the adhesive 7 and expose the holes 3. Less heat is applied above the clearances 31 and the clearances 31 are sealed by the adhesive 7. If the smallest area S1 of the holes 3 is larger than the largest area S2 of the holes or clearances 31 other than the holes 3, at the end of the filter body on which the hot-melt sheet-shaped adhesive 7 is arranged, it happens automatically that the hot-melt sheet-shaped adhesive 7 on all of the holes 3 drops into the holes 3 and the hot-melt sheet-shaped adhesive 7 on all of the clearances 31 other than the holes 3 remains thereon to seal them, as shown in Figs. 7 and 8, when the whole of the hot-melt sheet-shaped adhesive 7 is melted at the same time by, for example, a whole-range heater 61 shown in Fig. 6. If the diameter d1 of the smallest imaginary circle capable of being received in the holes 3 is larger than the diameter d2 of the largest imaginary circle capable of being received in the clearances 31 at the end of the filter body on which the hot-melt sheet-shaped adhesive 7 is arranged, as shown in Figs. 14 and 15, it happens automatically that the hot-melt sheet-shaped adhesive 7 on all of the holes 3 drops into the holes 3 and the hot-melt sheet-shaped adhesive 7 on all of the clearances 31 other than the holes 3 remains thereon to seal them. The whole of the hot-melt sheet-shaped adhesive 7 is melted at the same time by, for example, the whole-range heater 61 shown in Fig. 6. This happens because an unsupported length of the hot-melt sheet-shaped adhesive 7 on each of the holes or clearances is equal to or less than the diameter of the circle capable of being received in the hole or clearance. The diameter d1 of the smallest imaginary circle capable of being received in the holes 3 is larger than the diameter d2 of the largest imaginary circle capable of being received in the clearances 31 so that the smallest unsupported length of the hot-melt sheet-shaped adhesive 7 on the holes 3 is larger than the largest unsupported length of the hot-melt sheet-shaped adhesive 7 on the clearances 31. This causes a difference in rigidity between the hot-melt sheet-shaped adhesive 7 on the holes 3 and the hot-melt sheet-shaped adhesive 7 on the clearances 31, i.e. the rigidity of the hot-melt sheet-shaped adhesive 7 on all of the holes 3 is less than that on all of the clearances 31.

In this way, at one end of the filter body, the ends of the clearances 31 are closed or sealed by the hot-melt sheet-shaped adhesive 7 and the ends of the holes 3 are open. At the other end of the filter body, the ends of the holes 3 are closed or sealed by the adhesive sheet 52 and the ends of the clearances 31 are open, as described before, as shown in Fig. 9. For improving filtering efficiency of the filter element as measured by volume, number of filter paths and pressure loss, the diameter of the holes 3 is preferably 1.5 to 2.5 mm. In the embodiment of the present invention, since the holes 3 have cylindrical shapes, the total of the cross-sectional areas S1 of the holes 3 can be made significantly larger than that of the cross-sectional areas S2 of the clearances 31 and the total of the areas of the inner surfaces of the holes 3 can be made large so that filtering performance is improved and the volume of the filter body may be small. The total of the cross-sectional areas S2 of the clearances 31 is larger than the cross-sectional area S3 of the smallest diameter part in the inlet F3, the outlet F4 and so forth so that pressure loss in the holes 3 is low. As shown by arrows in Fig. 9, fuel flows from the holes 3 through the filter members 1, 2 to the clearances 31 to supply clean fuel to the engine. The circular cross-sectional shape of the holes 3 minimizes their deformation in response to an increase in pressure difference caused by the fuel pressure and/or dirt on the filter members 1, 2 and a decrease in filtering performance is prevented.

If the areas S1 of the holes 3 are substantially constant and the areas S2 of the clearances 31 are also substantially constant for a whole range of different ends of the filter body, the ratio of the average area S2 of the clearances 31 to the average area S1 of the holes 3 is preferably less than 0.4 so that the difference in rigidity between the hot-melt sheet-shaped adhesive 7 on the holes 3 and the hot-melt sheet-shaped adhesive 7 on the clearances 31 is made sufficiently large. In this embodiment, if the diameters of the holes 3 are 1.5 to 2.5 mm, the thickness of the hot-melt sheet-shaped adhesive 7 may be 80 to 300 µm. The hot-melt sheet-shaped adhesive 7 may be, for example, polyamide type or polyethylene type or polyolefine type.

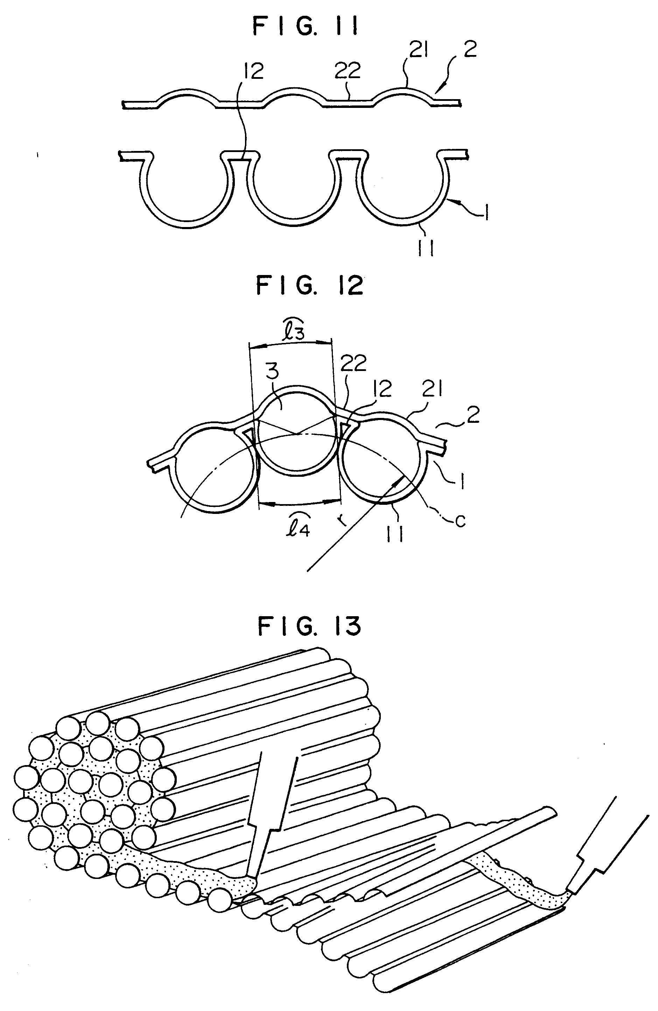

For the filter members 1, 2 shown in Figs. 11 and 12, the portions 12 and 22, through which the adjacent combinations of the portions 11 and 21 forming the circular holes 3 are connected to each other, are offset from an axis C extending through the centres of the circular holes 3. This enables the adjacent surfaces of the combinations of the portions 11 and 21 to contact each other. Therefore, when the combination of the filter members 1, 2 is rolled up to form the cylindrical filter body, the combinations of the portions 11 and 21 contact each other and the distances between the centers of the circular holes 3 are small so that the areas of the clearances 31 are small. Since the total of the areas of the holes 3 in the filter body is increased, the effective filtering area is increased. Thus, the filter body may be compact.

## Claims

1. A method for producing a filter element, comprising the step of:
forming a filter body (1, 2) having a first hole (3) and a second hole (31) which extends adjacent and substantially parallel to the first hole (3) and communicates with the first hole (3) through filter material, wherein, at one end of the filter body (1, 2), the first hole (3) is closed and the second hole (31) is open;
characterized in that the method further comprises the steps of:
covering the first and second holes (3, 31) at the other end of the filter body (1, 2) with sheet-like thermoplastic adhesive (7); and
melting the thermoplastic adhesive (7) so as to close and seal the adjacent end of the second hole (31) and to open the adjacent end of the first hole (3).

2. A method according to claim 1, wherein the thermoplastic adhesive (7) is melted above the first hole (3) to open the first hole by applying a relatively large amount of thermal energy and is melted above the second hole (31) to seal closed the second hole (31) by applying a relatively small amount of thermal energy.

3. A method according to claim 1 or 2, wherein the area (S1) of the end of the first hole (3) underneath the thermoplastic adhesive (7) is larger than the area (S2) of the end of the second hole (31) underneath the thermoplastic adhesive (7).

4. A method according to claim 1 or 2, wherein the diameter (d1) of the smallest imaginary circle capable of being received in the end of the first hole (3) underneath the thermoplastic adhesive (7) is larger than the diameter (d2) of the largest imaginary circle capable of being received in the end of the second hole (31) underneath the thermoplastic adhesive (7).

5. A method according to any one of claims 1 to 4, wherein the whole of the sheet-like thermoplastic adhesive (7) is melted at the same time.

6. A method according to claim 3, wherein the ratio of said area (S2) of the second hole (31) to said area (S1) of the first hole (3) is less than 0.4.

7. A method according to any one of claims 1 to 6, wherein the filter body (1, 2) has a plurality of pairs of the first and second holes (3, 31) and the areas (S1) of the ends of the first holes (3) underneath the thermoplastic adhesive (7) are substantially the same and the areas (S2) of the ends of the second holes (31) underneath the thermoplastic adhesive (7) are also substantially the same.

8. A method according to any one of claims 1 to 6, wherein the filter body (1, 2) has a plurality of pairs of the first and second holes (3, 31) and the smallest of the areas (S1) of the ends of the first holes (3) underneath the thermoplastic adhesive (7) is larger than the largest of the areas (S2) of the ends of the second holes (31) underneath the thermoplastic adhesive (7).

9. A method according to any one of claims 1 to 6, wherein the thickness of the sheet-like thermoplastic adhesive (7) is 80 to 300 µm and the first hole (3) is substantially circular and has a diameter of 1.5 to 2.5 mm.

## Patentansprüche

1. Verfahren zur Herstellung eines Filterelements, mit folgenden Schritten:
Bildung eines Filterkörpers (1, 2) mit einem ersten Loch (3) und einem zweiten Loch (31), das sich neben dem ersten Loch (3) erstreckt und im wesentlichen parallel zu diesem ist und über Filtermaterial mit dem ersten Loch (3) in Verbindung steht, wobei an einem Ende des Filterkörpers (1, 2) das erste Loch (3) geschlossen ist und das zweite Loch (31) offen ist;
dadurch gekennzeichnet, daß das Verfahren ferner folgende Schritte aufweist:
Abdecken der ersten und zweiten Löcher (3, 31) an dem anderen Ende des Filterkörpers (1, 2) mit einem bogenartigen thermoplastischen Haftmittel (7); und Schmelzen des thermoplastischen Haftmittels (7), um das benachbarte Ende des zweiten Loches (31) zu schließen und abzudichten und um das benachbarte Ende des ersten Loches (3) zu öffnen.

2. Verfahren nach Anspruch 1, wobei das thermoplastische Haftmittel (7) über dem ersten Loch (3) geschmolzen wird, um mittels Anwendung einer relativ großen Wärmemenge das erste Loch zu öffnen, und über dem zweiten Loch (31) geschmolzen wird, um mittels einer relativ geringen Wärmemenge das zweite Loch (31) schließend abzudichten.

3. Verfahren nach Anspruch 1 oder 2, wobei der Bereich (S1) des Endes des ersten Loches (3) unterhalb des thermoplastischen Haftmittels (7) größer als der Bereich (S2) des Endes des zweiten Loches (31) unterhalb des thermoplastischen Haftmittels (7) ist.

4. Verfahren nach Anspruch 1 oder 2, wobei der Durchmesser (d1) des kleinsten gedachten Kreises, der in dem Ende des ersten Loches (3) unterhalb des thermoplastischen Haftmittels (7) aufgenommen werden kann, größer als der Durchmesser (d2) des größten gedachten Kreises ist, der in dem Ende des zweiten Loches (31) unterhalb des thermoplastischen Harzes (7) aufgenommen werden kann.

5. Verfahren nach einem der Ansprüche 1 bis 4, wobei das gesamte bogenartige thermoplastische Haftmittel (7) gleichzeitig geschmolzen wird.

6. Verfahren nach Anspruch 3, wobei das Verhältnis des Bereichs (S2) des zweiten Loches (31) zum Bereich (S1) des ersten Loches (3) kleiner als 0,4 ist.

7. Verfahren nach einem der Ansprüche 1 bis 6, wobei der Filterkörper (1, 2) eine Vielzahl von Paaren der ersten und zweiten Löcher (3, 31) hat, wobei die Bereiche (S1) der Enden der ersten Löcher (3) unterhalb des thermoplastischen Haftmittels (7) im wesentlichen die gleichen sind und die Bereiche (S2) der Enden des zweiten Loches (31) unterhalb des thermoplastischen Haftmittels (7) ebenso im wesentlichen die gleichen sind.

8. Verfahren nach einem der Ansprüche 1 bis 6, wobei der Filterkörper (1, 2) eine Vielzahl von Paaren der ersten und zweiten Löcher (3, 31) hat, wobei der kleinste der Bereiche (S1) der Enden der ersten Löcher (3) unterhalb des thermoplastischen Haftmittels (7) größer als der größte der Bereiche (S2) der Enden der zweiten Löcher (31) unterhalb des thermoplastischen Haftmittels (7) ist.

9. Verfahren nach einem der Ansprüche 1 bis 6, wobei die Dicke des bogenartigen thermoplastischen Haftmittels (7) bei 80 bis 300 µm liegt und das erste Loch (3) im wesentlichen kreisförmig ist und einen Durchmesser von 1,5 bis 2,5 mm hat.

## Revendications

1. Procédé de fabrication d'un élément de filtre, comprenant l'étape qui consiste à:
former un corps (1, 2) de filtre ayant un premier trou (3) et un second trou (31) qui s'étend de façon contiguë et sensiblement parallèle au premier trou (3) et communique avec le premier trou (3) par une matière filtrante, dans lequel, à une première extrémité du corps (1, 2) de filtre, le premier trou (3) est fermé et le second trou (31) est ouvert;
caractérisé en ce que le procédé comprend en outre les étapes consistant à:
couvrir les premier et second trous (3, 31) à l'autre extrémité du corps (1, 2) de filtre avec un adhésif thermoplastique (7) en feuille; et
faire fondre l'adhésif thermoplastique (7) se façon à fermer de manière hermétique l'extrémité contiguë du premier trou (3).

2. Procédé selon la revendication 1, dans lequel l'adhésif thermoplastique (7) est fondu au-dessus du premier trou (3) pour ouvrir le premier trou en appliquant une quantité relativement grande d'énergie thermique et est fondu au-dessus du second trou (31) pour fermer de manière hermétique le second trou (31) en appliquant une quantité relativement faible d'énergie thermique.

3. Procédé selon la revendication 1 ou 2, dans lequel la superficie (S1) de l'extrémité du premier trou (3) sous l'adhésif thermoplastique (7) est plus grande que la superficie (S2) de l'extrémité du second trou (31) sous l'adhésif thermoplastique (7).

4. Procédé selon la revendication 1 ou 2, dans lequel le diamètre (d1) du plus petit cercle imaginaire apte à être reçu à l'extrémité du premier trou (3) sous l'adhésif thermoplastique (7) est plus grand que le diamètre (d2) du plus grand cercle imaginaire apte à être reçu à l'extrémité du second trou (31) sous l'adhésif thermoplastique (7).

5. Procédé selon l'une quelconque des revendications 1 à 4, dans lequel la totalité de l'adhésif thermoplastique (7) en feuille est fondue en même temps.

6. Procédé selon la revendication 3, dans lequel le rapport de ladite superficie (S2) du second trou (31) à ladite superficie (S1) du premier trou (3) est inférieur à 0,4.

7. Procédé selon l'une quelconque des revendications 1 à 6, dans lequel le corps (1, 2) de filtre a une pluralité de paires de premiers et seconds trous (3, 31), les superficies (S1) des extrémités des premiers trous (3) sous l'adhésif thermoplastique (7) sont sensiblement identiques, et les superficies (S2) des extrémités des seconds trous (31) sous l'adhésif thermoplastique (7) sont elles aussi sensiblement identiques.

8. Procédé selon l'une quelconque des revendications 1 à 6, dans lequel le corps (1, 2) de filtre a une pluralité de paires de premiers et seconds trous (3, 31) et la plus petite des superficies (S1) des extrémités des premiers trous (3) sous l'adhésif thermoplastique (7) est supérieure à la plus grande des superficies (S2) des extrémités des seconds trous (31) sous l'adhésif thermoplastique (7).

9. Procédé selon l'une quelconque des revendications 1 à 6, dans lequel l'épaisseur de l'adhésif thermoplastique (7) en feuille est de 80 à 300 µm et le premier trou (3) est sensiblement circulaire et a un diamètre de 1,5 à 2,5 mm.
